(19) **Europäisches Patentamt**
**European Patent Office**
**Office européen des brevets**

(11) **EP 3 369 748 B1**

(12) **EUROPEAN PATENT SPECIFICATION**

(45) Date of publication and mention
of the grant of the patent:
**29.07.2020 Bulletin 2020/31**

(51) Int Cl.:
***C08B 3/06*** *(2006.01)*     ***C08B 3/08*** *(2006.01)*
***C08B 3/10*** *(2006.01)*     ***C08B 3/20*** *(2006.01)*

(21) Application number: **16859929.8**

(86) International application number:
**PCT/JP2016/081969**

(22) Date of filing: **27.10.2016**

(87) International publication number:
**WO 2017/073700 (04.05.2017 Gazette 2017/18)**

(54) **MODIFIED CELLULOSE FINE FIBERS AND METHOD FOR PRODUCING SAME**

MODIFIZIERTE FEINE CELLULOSEFASERN UND VERFAHREN ZUR HERSTELLUNG DAVON

FIBRES FINES DE CELLULOSE MODIFIÉES, ET PROCÉDÉ DE FABRICATION DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2015 JP 2015211193**

(43) Date of publication of application:
**05.09.2018 Bulletin 2018/36**

(73) Proprietors:
• **Futamura Kagaku Kabushiki Kaisha**
**Nakamura-ku**
**Nagoya-shi**
**Aichi 450-0002 (JP)**
• **Asahi Kasei Kabushiki Kaisha**
**Tokyo 100-0006 (JP)**

(72) Inventors:
• **LIN Lianzhen**
**Kyoto-shi**
**Kyoto 600-8813 (JP)**
• **MARUTA Ayako**
**Kyoto-shi**
**Kyoto 600-8813 (JP)**

(74) Representative: **Hoffmann Eitle**
**Patent- und Rechtsanwälte PartmbB**
**Arabellastraße 30**
**81925 München (DE)**

(56) References cited:
**WO-A1-2015/025761**    **JP-A- H0 770 201**
**JP-A- S5 817 101**    **JP-A- S56 141 301**
**JP-A- S58 176 201**    **JP-A- S59 130 312**
**JP-A- 2003 064 184**    **JP-A- 2010 180 339**
**JP-A- 2010 235 758**    **US-A- 3 236 669**

• **CASARANO ROMEU et al.: "Successful Application of an Ionic Liquid Carrying the Fluoride Counter-ion in Biomacromolecular Chemistry: Microwave-Assisted Acylation of Cellulose in the Presence of 1-Allyl-3-methylimidazolium Fluoride/DMSO Mixtures", Macromolecular Bioscience, vol. 13, no. 2, 2013, pages 191-202, XP055540180,**

• **CASARANO ROMEU et al.: "A convenient solvent system for cellulose dissolution and derivatization: Mechanistic aspects of the acylation of the biopolymer in tetraallylammonium fluoride/dimethyl sulfoxide", Carbohydrate Polymers, vol. 86, no. 3, 2011, pages 1395-1402, XP055379543,**

• **SAMARANAYAKE GAMINI et al.: "Cellulose derivatives with low DS. I. A novel acylation system", Carbohydrate Polymers, vol. 22, no. 1, 1993, pages 1-7, XP024147480,**

• **SHIN'ICHI ISHIGURO et al.: "Nonaqueous Solution Coordination Chemistry Studied by Titration Calorimetry", Calorimetry and Thermal Analysis, vol. 28, no. 3, 2001, pages 135-143, XP055377545,**

**Description**

TECHNICAL FIELD

The present invention relates to surface-esterification-modified fine cellulose fibers which was synthesized via esterification using monobasic carboxylic anhydrides and methods for producing the same.

BACKGROUND ART

Cellulose fiber (cell wall unit) is an aggregation of fine cellulose fibers (or microfibrils). Fine cellulose fibers have mechanical characteristics equivalent to steel and have a nano-structure with a diameter of about 30 nm, and are thus socially attracting much attention as a reinforcer. The fine cellulose fibers are bonded or bundled by interfiber hydrogen bonding. In order to separate the fine fibers, it is necessary to loosen the hydrogen bonding and separate (fibrillate) the microfibrils. The separation of the microfibrils is referred to as fibrillation. As a method for fibrillating fine cellulose fibers (cellulose nanofibers), a mechanical fibrillation method in which a violent physical force is applied has been developed.
A widely used mechanical fibrillation method includes a mechanical fibrillation in water; in such a method, cellulose fibers are mechanically fibrillated in water. In the mechanical fibrillation in water, the cellulose fibers absorb water and swell, and the softened cellulose fibers are fibrillated (or nanoized) by strong mechanical shearing using a high-pressure homogenizer or other means. Natural cellulose microfibrils comprise a crystal zone and an amorphous zone. In the fibrillation (or nanoization), when the amorphous zone absorbs a swelling solvent, such as water, and is put into a swollen state, the amorphous zone is deformed by strong shearing. Accordingly, the cellulose fibers are damaged by shearing to be deformed into a branched shape which easily causes entanglement or roughness. Moreover, a strong mechanical pulverization method such as a ball milling causes a mechanochemical reaction peculiar to a solid state. This action inevitably breaks or dissolves the crystal structure of the cellulose. Consequently, the fine cellulose fibers tend to have a low yield and a low degree of crystallinity. Further, the fine cellulose fibers are utilizable as a resin-reinforcing material. To compound the fine cellulose fibers with a resin, in the mechanical fibrillation in water, it is necessary to dehydrate the fine cellulose fibers after fibrillation and make the surface of the fibers hydrophobic by modification. This dehydration step needs a high energy.
As a method for producing fine cellulose fibers having an esterified surface and an excellent dispersibility in an organic medium such as a resin or an organic solvent, Japanese Patent Application Laid-Open Publication No. 2010-104768 (JP-2010-104768A, Patent Document 1) discloses a method for producing polysaccharide nanofibers; the method comprises swelling and/or partially dissolving a cellulosic substance with a mixed solvent containing an ionic liquid, such as butylmethylimidazolium chloride, and an organic solvent and then esterifying the resulting product. In working examples of this document, acetic anhydride and butyric anhydride are used as an esterification agent.
Unfortunately, this production method needs use of the special ionic liquid. A purification step for recovering or recycling the ionic liquid leads to increase in production cost of the cellulose nanofibers or complication of the production process.
Japanese Patent Application Laid-Open Publication (Translation of PCT Application) No. 2015-500354 (JP-2015-500354A, Patent Document 2) discloses a method for producing a cellulose nanofiber suspension; the method comprises mixing a cellulose and an organic solvent, adding an esterification agent to the resultant mixture, and physically breaking the resultant mixture, an esterification reaction of hydroxyl group (s) on the surface of the cellulose fibers occurring at the time as the breaking. Working examples of this document describes an example which comprises mixing a cellulose and chloroform, adding succinic anhydride to the mixture, and ultrasonically crushing the resultant mixture, an example which comprises mixing a cellulose and pyridine, adding lauroyl chloride to the mixture, and ball-grinding the resultant mixture, or other examples. Japanese Patent Application Laid-Open Publication No. 2011-16995 (JP-2011-16995A, Patent Document 3) discloses a method for producing a modified cellulose fiber dispersion; the method comprises a step of modifying a wood pulp with a substituent containing an aromatic ring to give a modified cellulose, a step of fibrillating the resulting modified cellulose to fine cellulose fibers having an average fiber diameter of not larger than 100 nm to give a modified cellulose fiber dispersion. In working examples of this document, a cellulose is modified with benzoyl chloride or naphthoyl chloride, and then the modified cellulose is fibrillated by a superhigh-pressure homogenizer.
Unfortunately, according to the methods of Patent Documents 2 and 3, fibrillation by strong mechanical crush damages the cellulose fibers as described above. Further, equipment or energy for mechanical crush is also needed. Furthermore, since microfibrils of cellulose cannot be sufficiently impregnated with a solution containing an esterification agent, esterification modification (ester-modification) is limited to almost only the surface of the cellulose fibers. In a case where the cellulose fibers in such a state are fibrillated to nano-size by applying mechanical fibrillation, it is probable that the resulting nanofibers be hardly modified and have a low dispersibility in an organic solvent or a resin.
As a chemical fibrillation method that does not need strong fibrillation or pulverization, a TEMPO oxidation method using 2,2,6,6-tetramethyl-1-piperidine-N-oxyradical (TEMPO) is also attracting attention. WO2010/116794 pamphlet (Patent Document 4) discloses a method for producing a cellulose nanofiber dispersion; the method comprises oxidizing a cellulosic material with an oxidizing agent in the presence of an N-oxyl compound such as TEMPO and a bromide and/or iodide, and then subjecting the oxidized cellulosic material to wet mechanical fibrillation treatment.

Unfortunately, although the cellulose nanofibers obtained by the TEMPO oxidation method have a high hydrophilicity or a high dispersibility in water, the cellulose nanofibers have a low dispersibility in an organic medium. Further, due to use of an expensive TEMPO catalyst or a large amount of an alkali substance, this method has an economical inefficiency, a difficulty in waste water treatment, and a large burden on the environment.

CITATION LIST

PATENT LITERATURE

Patent Document 1: JP-2010-104768A (claim 1 and Examples)
Patent Document 2: JP-2015-500354A (claim 1 and Examples)
Patent Document 3: JP-2011-16995A (claim 1 and Examples)
Patent Document 4: WO2010/116794 pamphlet (claim 6)

SUMMARY OF INVENTION

TECHNICAL PROBLEM

It is therefore an object of the present invention to provide modified fine cellulose fibers that are simply and efficiently producible without strong crushing and have a diameter from several nano-meters to submicrometers, a large aspect ratio, a high degree of crystallinity, less damage in the shape or crystalline structure of the fibers, and an excellent dispersibility in an organic solvent, and to provide a method for producing the modified fine cellulose fibers.

Another object of the present invention is to provide modified fine cellulose fibers having a high affinity for an organic medium, and to provide a method for producing the modified fine cellulose fibers.

It is still another object of the present invention to provide modified fine cellulose fibers having a high fibrillation efficiency, a high modification percentage, and less or no decomposition or coloring, and to provide a method for producing the modified fine cellulose fibers.

SOLUTION TO PROBLEM

The inventors of the present invention made intensive studies to achieve the above objects and finally found the following: a cellulose is impregnated with a reactive fibrillation solution or mixture containing a base or organic acid catalyst, a monobasic carboxylic anhydride, and an aprotic solvent having a donor number of not less than 26 without strong crushing to esterify and chemically fibrillate the cellulose, giving specific modified fine cellulose fibers; the specific modified fine cellulose fibers have a diameter from several nano-meters to submicrometers, a large aspect ratio, a high degree of crystallinity, less damage in the shape or crystalline structure of the fine fibers, and an excellent dispersibility in an organic solvent; and this method allows energy-saving, simple, and efficient production of such fine cellulose fibers. The present invention was accomplished based on the above findings.

That is, an aspect of the present invention provides a method for producing modified fine cellulose fibers, the method comprises impregnating a cellulose with a reactive fibrillation solution or mixture to esterify and chemically fibrillate (loose or disaggregate) the cellulose, and in the method the reactive fibrillation solution or mixture contains a catalyst including a base catalyst or an organic acid catalyst, a monobasic carboxylic anhydride, and an aprotic solvent having a donor number of not less than 26. The monobasic carboxylic anhydride may comprise at least one member selected from the group consisting of an aliphatic monocarboxylic anhydride, an alicyclic monocarboxylic anhydride, and an aromatic monocarboxylic anhydride (particularly, a $C_{1-6}$alkane-monocarboxylic anhydride). The aprotic solvent having a donor number of not less than 26 may comprise at least one member selected from the group consisting of dimethylsulfoxide, N,N-dimethylacetamide, N,N-dimethylformamide, and N-methyl-2-pyrrolidone. The catalyst may comprise at least one base catalyst selected from the group consisting of an alkali metal compound, an alkaline earth metal compound, an amine compound, and a quaternary ammonium salt. The catalyst preferably contains a pyridine compound. The proportion of the monobasic carboxylic anhydride is about 3 to 50% by weight in the reactive fibrillation solution or mixture (or the whole reactive fibrillation solution or mixture). The proportion of the base catalyst is about 0.05 to 90% by weight in the reactive fibrillation solution or mixture. The base catalyst may comprise a pyridine compound in combination with an alkali metal compound and/or an alkaline earth metal compound, and in such a case, the proportion of the base catalyst is about 0.05 to 20% by weight in the reactive fibrillation solution or mixture. The cellulose can hold or swell 10 to 100 times its weight in the reactive fibrillation solution or mixture. The weight ratio of the cellulose relative to the reactive fibrillation solution or mixture is about 1/99 to 30/70 in the former/the latter.

Another aspect of the present invention provides modified fine cellulose fibers, and the modified fine cellulose fibers are modified with a monobasic carboxylic anhydride and have a dispersibility in a hydrophobic solvent, a degree of crystallinity of not less than 70%, an average fiber diameter of 10 to 800 nm, and an average fiber length of 1 to 200 μm. The modified fine cellulose fibers have an average substitution degree of about 0.05 to 1.0.

ADVANTAGEOUS EFFECTS OF INVENTION

According to the present invention, a cellulose is esterified and chemically fibrillated by impregnating the cellulose with the reactive fibrillation solution or mixture containing the base or organic acid catalyst, the monobasic carboxylic anhydride, and the aprotic solvent having a donor number of not less than 26 without strong crushing such as mechanical pulverization, and this allows fibrillation of a naturally-derived cellulose without damaging the crystal structure or microfibril structure of the cellulose. In particular, the present invention allows swelling of the cellulose following impregnation of the cellulose with the reactive fibrillation solution or mixture and allows improvement in the cellulose fibrillation efficiency. Accordingly, the present invention enables energy-saving, simple, and efficient production of the fine cellulose fibers having a nano-size (or a diameter from several nano-meters to submicrometers), a high degree of crystallinity, less damage in the shape or crystalline structure of the fibers, a large aspect ratio, and an excellent dispersibility in an organic solvent. Further, since the resulting modified fine cellulose fibers each uniformly have a surface modified with a monobasic carboxylic anhydride, the affinity for an organic medium such as a resin is improvable. Moreover, combination of a pyridine compound with an alkali metal compound and/or an alkaline earth metal compound as the base catalyst improves the fibrillation property and modification percentage of the cellulose, reduces or prevents the decomposition or coloring of the resulting fine cellulose fibers, and allows the fibrillation and the modification in a short period of time. Thus, the combination improves the productivity of the modified fine cellulose fibers. Furthermore, use of an organic acid catalyst as the catalyst effectively reduces or prevents the coloring.

BRIEF DESCRIPTION OF DRAWINGS

[Fig. 1] Fig. 1 is an IR spectrum of modified fine cellulose fibers obtained in Example 1.
[Fig. 2] Fig. 2 is a scanning electron microscope (SEM) photograph of modified fine cellulose fibers obtained in Example 1.
[Fig. 3] Fig. 3 is an IR spectrum of modified fine cellulose fibers obtained in Example 2.
[Fig. 4] Fig. 4 is a SEM photograph of modified fine cellulose fibers obtained in Example 2.
[Fig. 5] Fig. 5 is an IR spectrum of modified fine cellulose fibers obtained in Example 3.
[Fig. 6] Fig. 6 is a SEM photograph of modified fine cellulose fibers obtained in Example 3.
[Fig. 7] Fig. 7 is an IR spectrum of modified fine cellulose fibers obtained in Example 4.
[Fig. 8] Fig. 8 is a SEM photograph of modified fine cellulose fibers obtained in Example 4.
[Fig. 9] Fig. 9 is an IR spectrum of modified fine cellulose fibers obtained in Example 10.
[Fig. 10] Fig. 10 is a SEM photograph of modified fine cellulose fibers obtained in Example 10.
[Fig. 11] Fig. 11 is a SEM photograph of modified fine cellulose fibers obtained in Example 11.
[Fig. 12] Fig. 12 is a SEM photograph of modified fine cellulose fibers obtained in Example 12.
[Fig. 13] Fig. 13 is a SEM photograph of modified fine cellulose fibers obtained in Example 13.

DESCRIPTION OF EMBODIMENTS

[Method for producing modified fine cellulose fibers]

According to a method for producing modified fine cellulose fibers (fine esterified cellulose fibers) of the present invention, the modified fine cellulose fibers of which a surface is esterified are obtained through impregnating cellulose, which is followed by swelling, and esterifying the cellulose with a reactive fibrillation solution (a reactive fibrillation mixture) which contains a catalyst including a base catalyst or an acid catalyst, a monobasic carboxylic anhydride, and an aprotic solvent having a donor number of not less than 26. According to the present invention, the reason why the cellulose is modified and simultaneously fibrillated by this process is probably as follows. That is, the reactive fibrillation solution (or mixture) containing the catalyst, the monobasic carboxylic anhydride, and the solvent is a solution which has a low solubility to a cellulose and which can efficiently impregnate and swell the intervals between the cellulose fibrils (or microfibrils) and reacts with (or modifies) the hydroxyl group (s) on the surface of the fibrils via esterification Further, this modification breaks hydrogen bonds between the fibrils or microfibrils, and the microfibrils are easily separated and fibrillated. Moreover, since the solution fails to infiltrate into a crystal zone (domain) of such microfibrils, the resulting modified fine cellulose fibers are less damaged and have a structure close to a natural microfibril structure. At the same time, this step allows fibrillation of the cellulose even without any mechanical fibrillation means using the action of a shearing force, and has less or no damage caused by a physical action. Thus, the resulting modified fine cellulose fibers probably maintain a high strength.

(Cellulose)

A raw material cellulose may be a cellulose alone (or a single cellulose) or may be a mixture (or a combination) of a cellulose and a noncellulosic component such as a lignin or a hemicellulose.

The single cellulose (or a cellulose having less or no noncellulosic component content) may include, for example, a pulp (e.g., a wood pulp, a bamboo pulp, a straw pulp, a bagasse pulp, a linter pulp, a flax pulp, a hemp pulp, a kozo pulp, and a mitsumata pulp), an ascidian (or sea squirt) cellulose, a bacterial cellulose, a cellulose powder, and a crystalline cellulose.

The mixture of the cellulose and the noncellulosic component (or cellulose composition) may include, for example, a wood [e.g., a coniferous tree (such as a pine, a fir, a spruce, a Japanese hemlock, or a Japanese cedar), a broad-leaved tree (such as a beech, a birch, a poplar, or a maple)], a herbaceous plant [such as a hemp plant (such as a hemp, a flax, a Manila hemp, or a ramie), a straw, a bagasse, or a mitsumata plant], a seed-hair fiber (such as a cotton linter, a bombax cotton, or a kapok), a bamboo, a sugar cane, and a paper.

These celluloses may be used alone or in combination. The proportion of the noncellulosic component in the mixture may be not more than 90% by weight, for example, may be about 1 to 90% by weight, preferably about 3 to 80% by weight, and more preferably about 5 to 70% by weight. An excessively high proportion of the noncellulosic component may make it difficult to produce the modified fine cellulose fibers.

The cellulose preferably contains a crystalline cellulose (in particular, a crystalline cellulose I), or may contain a crystalline cellulose and a noncrystalline cellulose (such as an amorphous cellulose). The proportion of the crystalline cellulose (in particular, a crystalline cellulose I) in the whole cellulose may be not less than 10% by weight, for example, is about 30 to 99% by weight, preferably about 50 to 98.5% by weight, and more preferably about 60 to 98% by weight. An excessively low proportion of the crystalline cellulose may reduce the heat resistance or strength of the modified fine cellulose fibers.

Among them, from the point of view of easy modification and fibrillation, a widely used cellulose includes a wood pulp (e.g., a coniferous tree pulp, a broad-leaved tree pulp), a pulp of seed-hair fibers (e.g., a cotton linter pulp), a cellulose powder, or others. Incidentally, the pulp to be used may include a mechanical pulp obtainable by mechanically treating a pulp material. In view of less or no noncellulosic component content, the pulp to be used preferably includes a chemical pulp obtainable by chemically treating a pulp material.

The cellulose may have a water content (a weight ratio of water relative to a dry cellulose) of not less than 1% by weight, and for example, has a water content of about 1 to 100% by weight, preferably about 2 to 80% by weight, and more preferably about 3 to 60% by weight (in particular, about 5 to 50% by weight) . According to the present invention, in view of a degree of fibrillation or a fibrillation efficiency, the cellulose preferably contains water within such a range. For example, a commercially available cellulose pulp may be used as it is without drying the cellulose pulp. A cellulose having an excessively low water content may decrease in fibrillation property.

As a pretreatment of the raw material cellulose, it is preferred that the raw material cellulose (particularly, a pulp) may be torn or cut as short as the raw material cellulose may be accommodated by a fibrillation reactor or container by tearing or cutting the raw material cellulose into fine strips or pieces according to the size of the fibrillation reactor, and then such a pretreated cellulose is subjected to a fibrillation reaction treatment. From the viewpoint of the fibrillation efficiency, strong pulverization is not preferred, because such a pulverization compacts cellulose pulp or cellulose fibers having a high void ratio to densify the cellulose pulp or cellulose fibers. Such dense cellulose pulp or cellulose fibers may hardly be impregnated with the reactive fibrillation solution.

The weight ratio of the cellulose relative to the reactive fibrillation solution can be selected from a range of about 1/99 to 35/65 in the former/the latter, and is, for example, about 1.2/98.8 to 30/70, preferably about 1.5/98.5 to 25/75, and more preferably about 2/98 to 20/80. An excessively low ratio of the cellulose reduces production efficiency of the modified fine cellulose fibers. An excessively high ratio of the cellulose lengthens the reaction time and leads to manufacture irregularity. In either case, the productivity may be reduced. Further, an excessively high ratio of the cellulose may reduce the uniformity of the size and modification percentage of the resulting fine fibers.

The saturated absorptivity of the cellulose to the reactive fibrillation solution is 10 time or more (e.g., about 10 to 200 times), preferably 20 times or more (e.g., about 20 to 150 times), and more preferably 30 times or more (e.g.,

about 30 to 100 times). An excessively low saturated absorptivity may reduce the rate of impregnation or swelling to decrease the fibrillation property of the cellulose and the uniformity of the resulting fine fibers.

(Monobasic carboxylic anhydride)

The monobasic carboxylic (monocarboxylic) anhydride (an esterification agent), which is a product obtainable by dehydration condensation of two independent carboxylic acid molecules, is represented by the formula: $R^1CO\text{-}O\text{-}OCR^2$, wherein $R^1$ and $R^2$ are the same or different and each represent a saturated or unsaturated aliphatic hydrocarbon group, a saturated or unsaturated alicyclic hydrocarbon group, or an aromatic hydrocarbon group. The monobasic carboxylic anhydride may include an aliphatic monocarboxylic anhydride, an alicyclic monocarboxylic anhydride, and an aromatic monocarboxylic anhydride.

The aliphatic monocarboxylic anhydride may include, for example, a saturated aliphatic monocarboxylic anhydride such as acetic anhydride, propionic anhydride, butyric anhydride, isobutyric anhydride, valeric anhydride, or ethanoic propionic anhydride; and an unsaturated aliphatic monocarboxylic anhydride such as (meth)acrylic anhydride, crotonic anhydride, or oleic anhydride. The alicyclic monocarboxylic anhydride may include, for example, cyclohexanecarboxylic anhydride and tetrahydrobenzoic anhydride. The aromatic monocarboxylic anhydride may include, for example, an aromatic monocarboxylic anhydride such as benzoic anhydride or 4-methylbenzoic anhydride. These monobasic carboxylic anhydrides may be used alone or in combination.

Among these monobasic carboxylic anhydrides, in the light of modification property and fibrillation property, a preferred one includes a lower aliphatic monocarboxylic anhydride having 2 to 7 (in particular, 2 to 5) carbon atoms, such as acetic anhydride, propionic anhydride, butyric anhydride, (meth)acrylic anhydride, or crotonic anhydride, and a particularly preferred one may include a $C_{1-6}$alkane-monocarboxylic anhydride (in particular, a $C_{1-4}$alkane-monocarboxylic anhydride). An excessively large number of carbon atoms may reduce the permeability of the reactive fibrillation solution into microfibrils and the reactivity to hydroxyl groups of the cellulose. Thus, it is preferred that the monobasic carboxylic anhydride at least contain a $C_{1-6}$alkane-monocarboxylic anhydride (in particular, a $C_{1-4}$alkane-monocarboxylic anhydride). In the light of the fibrillation rate, it is particularly preferred that the monobasic carboxylic anhydride at least contain a $C_{1-3}$alkane-monocarboxylic anhydride (in particular, acetic anhydride).

In particular, in order to regulate the hydrophobicity of the resulting fine fibers or the dispersibility of the fine fibers in an organic medium, acetic anhydride may be combined with a $C_{2-3}$alkane-monocarboxylic anhydride (propionic anhydride and/or butyric anhydride). The weight ratio of acetic anhydride relative to the $C_{2-3}$alkane-monocarboxylic anhydride can be selected from a range of about 9/1 to 0.1/9.9 in the former/the latter, and is, for example, about 7/3 to 1/9, preferably about 5/5 to 1.5/8.5, and more preferably about 4/6 to 2/8.

Further, a highly hydrophobic monobasic carboxylic anhydride having 5 or more carbon atoms (for example, a $C_{4-18}$alkane-monocarboxylic anhydride) as a modifying agent may be combined with a $C_{1-3}$alkane-monocarboxylic anhydride (in the light of the fibrillation effect, particularly acetic anhydride). The weight ratio of the monobasic carboxylic anhydride having 5 or more carbon atoms relative to the $C_{1-3}$alkane-monocarboxylic anhydride can be selected from a range of about 9.9/0.1 to 5/5 in the former/the latter, and is, for example, about 9.5/0.5 to 5.5/4.5, preferably about 9/1 to 6/4, and more preferably about 8.5/1.5 to 6.5/3.5.

In the light of well balancing the permeability into microfibrils and the reactivity to hydroxyl groups of the cellulose, the monobasic carboxylic anhydride may have a concentration (a weight ratio) selected from a range of about 1 to 50% by weight (e.g., 3 to 50% by weight) in the reactive fibrillation solution. For example, the concentration of the monobasic carboxylic anhydride is about 2 to 40% by weight, preferably about 3 to 30% by weight, and more preferably about 5 to 20% by weight.

(Catalyst)

According to the present invention, in order to facilitate the esterification of the cellulose, a catalyst is used in addition to the monobasic carboxylic anhydride. The catalyst includes a base catalyst and an organic acid catalyst.

The base catalyst may include, for example, an alkali metal compound, an alkaline earth metal compound, an amine compound, and a quaternary ammonium salt. These base catalysts may be used alone or in combination.

The alkali metal compound may include, for example, an alkali metal hydroxide such as lithium hydroxide, sodium hydroxide, or potassium hydroxide; an alkali metal carbonate such as lithium carbonate, sodium carbonate, or potassium carbonate; an alkali metal hydrogencarbonate such as sodium hydrogencarbonate or potassium hydrogencarbonate; an alkali metal hydride such as sodium hydride or potassium hydride; an alkali metal carboxylate such as sodium acetate, potassium acetate, sodium propionate, potassium propionate, or sodium butyrate; an alkali metal borate such as sodium metaborate or sodium tetraborate (borax); an alkali metal phosphate such as trisodium phosphate; an alkali metal hydrogenphosphate such as sodium dihydrogenphosphate, potassium dihydrogenphosphate, or disodium hydrogenphosphate; an alkali metal alkoxide such as sodium methoxide, potassium methoxide, sodium ethoxide, potassium ethoxide, sodium t-butoxide, or potassium t-butoxide.

The alkaline earth metal compound may include, for example, an alkaline earth metal hydroxide such as magnesium hydroxide or calcium hydroxide; an alkaline earth metal carbonate such as magnesium carbonate; an alkaline earth metal hydrogencarbonate such as magnesium hydrogencarbonate; an alkaline earth metal carboxylate such as calcium acetate; and an alkaline earth metal alkoxide such as calcium t-butoxide.

As the amine compound, a tertiary amine compound is practically used. The tertiary amine compound may include, for example, a trialkylamine compound such as trimethylamine, triethylamine, diethylmethylamine, diisopropylethylamine, tri-n-propylamine, or tributylamine; an alkanolamine compound such as triethanolamine or dimethylaminoethanol; a tricycloalkylamine such as tricyclohexylamine; an alkyldicycloalkylamine such as methyldicyclohexylamine; and a heterocyclic amine compound such as picoline, pyridine, pyrazine, pyrimidine, pyridazine, 1-methylimidazole, triethylenediamine, N,N-dimethylaminopyridine, or 1,8-diazabicyclo[5.4.0]unde-7-cene.

The quaternary ammonium salt may include, for example, a tetraalkylammonium acetate (tetraalkylammonium acetic acid salt) such as tetraethylammonium acetate or tetrabutylammonium acetate; a tetraalkylammonium halide such as tetraethylammonium chloride or tetraethylammonium bromide; and a benzyltrialkylammonium halide such as benzyltrimethylammonium chloride.

Among these base catalysts, a widely used one includes, for example, an alkali metal carboxylate such as sodium acetate, an alkali metal carbonate such as sodium carbonate, an alkali metal hydrogencarbonate such as sodium hydrogencarbonate, a $triC_{1-4}$alkylamine such as triethylamine, and a heterocyclic amine compound such as pyridine.

The organic acid catalyst may include, for example, a carboxylic acid (e.g., an aliphatic monocarboxylic acid such as formic acid; and aliphatic dicarboxylic acid such as oxalic acid), and a sulfonic acid (e.g., an alkanesulfonic acid such as methanesulfonic acid, ethanesulfonic acid, or trifluoromethanesulfonic acid; and an arenesulfonic acid such as benzenesulfonic acid, p-toluenesulfonic acid, or naphthalenesulfonic acid). These acid catalysts may be used alone or in combination. Among these organic acid catalysts, a preferred organic acid catalyst includes a carboxylic acid such as formic acid or oxalic acid, an arenesulfonic acid or a salt thereof (in particular, a salt with a weak alkaline metal such as lithium, magnesium, calcium, or iron) such as toluenesulfonic acid. A particularly preferred organic acid catalyst includes an arenesulfonic acid such as toluenesulfonic acid.

Among these catalysts, in the light of not only the catalytic action in the esterification reaction but also facilitation of the fibrillation, a base catalyst such as a heterocyclic amine compound is preferred, and a base catalyst containing a pyridine compound is particularly preferred. Further, the pyridine compound, which has a low boiling point, is easily recovered and reused. Moreover, the pyridine compound (in particular, pyridine) serves as a solvent as well as a catalyst. Thus, the pyridine compound may be added in an amount more than a catalytic amount to function as a solvent.

The pyridine compound may include, for example, pyridine; a $C_{1-4}$alkylpyridine such as methylpyridine (picoline) or ethylpyridine; a $diC_{1-4}$alkylpyridine such as dimethylpyridine (lutidine); and a $triC_{1-4}$alkylpyridine such as trimethylpyridine (collidine). Among them, pyridine is preferred. The pyridine compounds may be used alone or in combination.

In a preferred embodiment, the base catalyst contains a pyridine compound (particularly, pyridine). The base catalyst may contain a pyridine compound alone. In order to improve the productivity (production efficiency, fibrillation property, and modification property) of the modified fine cellulose fibers and to reduce or prevent the coloring or decomposition of the modified fine cellulose fibers, in a particularly preferred embodiment, the base catalyst contains combination of a pyridine compound (particularly, pyridine) and an alkali metal compound and/or alkaline earth metal compound (hereinafter, the alkali metal compound and the alkali earth metal compound may collectively be referred to as "metal compound").

The metal compound to be combined with the pyridine compound (particularly, pyridine) is the above-mentioned alkali metal compound and alkaline earth metal compound. To achieve both efficient production and appropriate physical properties of the fine cellulose fibers by combination with the pyridine compound, a preferred metal compound may include an alkali metal carbonate such as sodium carbonate; an alkali metal hydrogencarbonate such as sodium hydrogencarbonate; an alkali metal carboxylate such as sodium acetate; an alkali metal borate such as sodium tetraborate (borax); an alkali metal phosphate such as trisodium phosphate; an alkali metal hydrogenphosphate such as sodium dihydrogenphosphate, potassium dihydrogenphosphate, or disodium hydrogenphosphate; an alkaline earth metal carbonate such as magnesium carbonate; an alkaline earth metal hydrogencarbonate such as magnesium hydrogencarbonate; and an alkaline earth metal carboxylate such as calcium acetate. A particularly preferred metal compound may include an alkali metal carbonate such as sodium carbonate; an alkali metal hydrogencarbonate such as sodium hydrogencarbonate; and an alkali metal $C_{1-4}$alkane-monocarboxylate such as sodium acetate.

In a case where the pyridine compound and the metal compound are used in combination, the ratio of the metal compound (the total ratio of the alkali metal compound and the alkaline earth metal compound in a case where the alkali metal compound and the alkaline earth metal compound are used in combination) relative to 100 parts by weight of the pyridine compound is, for example, about 1 to 50 parts by weight, preferably about 2 to 30 parts by weight, and more preferably about 3 to 20 parts by weight (in particular, about 5 to 15 parts by weight). An excessively low ratio of the metal compound may reduce the modification percentage of the fine cellulose fibers or lengthen the reaction time. In contrast, an excessively high ratio of the metal compound may cause excessive modification, reducing the yield of the fine cellulose fibers.

For the base catalyst, the proportion of the catalyst in the whole reactive fibrillation solution is 0.05 to 99% by weight (for example, 0.1 to 98% by weight), for example, about 0.2 to 99% by weight (for example, about 1 to 97% by weight), preferably about 2 to 95% by weight, and more preferably about 5 to 90% by weight (particularly about 10 to 90% by weight) . For the organic acid catalyst, the proportion of the catalyst in the whole reactive fibrillation solution is 0.5 to 50% by weight (for example, 1 to 35% by weight), for example, about 2 to 30% by weight (for example, about 3 to 25% by weight), preferably about 5 to 20% by weight, and more preferably about 7 to 15% by weight.

The proportion of the catalyst may be selected according to the function of the catalyst. In a case where the catalyst expresses only a catalytic action, the proportion of the catalyst in the whole reactive fibrillation solution is, for example, about 0.01 to 20% by weight, preferably about 0.05 to 18% by weight, and more preferably about 0.1 to 15% by weight (particularly about 3 to 12% by weight) . For example, in a case where the catalyst contains a pyridine compound and a metal compound in combination, the proportion (the total proportion) of the catalyst may be within this range.

In a case where the catalyst also functions as a solvent and is utilized as not only a catalyst but also a solvent, the proportion of the catalyst in the whole reactive fibrillation solution may be not less than 20% by weight, and is, for example, about 20 to 80% by weight, preferably about 23 to 50% by weight, and more preferably about 25 to 40% by weight. For example, in a case where the catalyst contains a pyridine compound (particularly, in a case where the catalyst contains a pyridine compound alone), the proportion of the catalyst may be within this range.

An excessively low proportion of the catalyst may reduce the modification percentage of the cellulose and may also reduce an action of fibrillating the cellulose. In contrast, an excessively high proportion of the catalyst may violently decompose the cellulose and may reduce an action of fibrillating the cellulose due to a reduced permeability of the reactive fibrillation solution into the cellulose.

(Solvent)

The solvent may be any solvent that does not damage the reactivity of the monobasic carboxylic anhydride or the fibrillation of the cellulose. A solvent containing an aprotic solvent having a donor number of not less than 26 is preferred in the light of facilitating the permeability of the monobasic carboxylic anhydride into microfibrils and suitably regulating the reactivity to hydroxyl groups of the cellulose. Such an aprotic solvent has a donor number of, for example, about 26 to 35, preferably about 26.5 to 33, and more preferably about 27 to 32. An excessively small donor number may fail to induce the effect that improves the permeability of the monobasic carboxylic anhydride into microfibrils. Incidentally, the donor number may be referred to the document "Netsu Sokutei 28(3) 135-143".

The aprotic solvent may include, for example, an alkylsulfoxide compound, an alkylamide compound, and a pyrrolidone compound. These solvents may be used alone or in combination.

The alkylsulfoxide compound may include, for example, a $diC_{1-4}$alkylsulfoxide such as dimethylsulfoxide (DM-SO), methylethylsulfoxide, or diethylsulfoxide.

The alkylamide compound may include, for example, an N,N-$diC_{1-4}$alkylformamide such as N,N-dimethylformamide (DMF) or N,N-diethylformamide; and an N,N-$diC_{1-4}$alkylacetamide such as N,N-dimethylacetamide (DMAc) or N,N-diethylacetamide.

The pyrrolidone compound may include, for example, a pyrrolidone such as 2-pyrrolidone or 3-pyrrolidone; and N-$C_{1-4}$alkylpyrrolidone such as N-methyl-2-pyrrolidone (NMP) .

These aprotic solvents may be used alone or in combination. Among these aprotic solvents, for example, DMSO (29.8), DMF (26.6), DMAc (27.8), and NMP (27.3) are widely used, where the number in the parenthesis indicates a donor number.

Among these aprotic solvents, in the light of achieving a highly facilitated permeability of the monobasic carboxylic anhydride into microfibrils, an alkylsulfoxide compound and/or an alkylacetamide compound (particularly, a $diC_{1-2}$alkylsulfoxide such as DMSO and/or a N,N-$diC_{1-2}$alkylacetamide such as DMAc) is preferred. In the light of improving the fibrillation effect of the cellulose, DMSO is particularly preferred. In the light of reducing or preventing the discoloration, DMAc is particularly preferred.

The solvent may contain other solvents, for example, a commonly used aprotic solvent having a donor number of less than 26, such as acetonitrile, dioxane, acetone, dimethyl ether, or tetrahydrofuran. It is preferred that the solvent contain the aprotic solvent having a donor number of not less than 26 as a main solvent. The proportion of the aprotic solvent having a donor number of not less than 26 in the whole solvent may be not less than 50% by weight, preferably not less than 80% by weight, and more preferably not less than 90% by weight, or may be 100% by weight (i.e., the solvent contains the aprotic solvent having a donor number of not less than 26 alone) . An excessively high proportion of the solvent having a donor number of less than 26 may reduce the cellulose fibrillation effect due to a reduced cellulose permeability of the reactive fibrillation solution into microfibrils.

The weight ratio of the catalyst relative to the solvent (particularly, an aprotic solvent such as an alkylsulfoxide compound and/or an alkylamide compound) influences the modification reaction rate and the impregnation (or permeation) rate of the reactive fibrillation solution in the cellulose microfibrils. The weight ratio of the both may be selected according to the species of the catalyst. For example, in a case where the base catalyst (alkaline catalyst), e.g., a weak alkaline catalyst such as pyridine, is used alone, the weight ratio of the weak alkaline catalyst relative to the solvent (particularly, an alkylsulfoxide compound and/or an alkylamide compound) can be selected from range of about 90/10 to 10/90 in the former/the latter, and is, for example, about 85/15 to 15/85 and preferably about 80/20 to 20/80. In a case where the catalyst contains a stronger alkaline catalyst such as the above-mentioned metal hydroxide or metal salt, the ratio of the catalyst may be low; the weight ratio of the base catalyst (particularly, combination of a pyridine compound and an alkali metal compound) relative to the solvent (particularly an alkylsulfoxide compound) can be selected from a range of about 30/70 to 0.05/99.95 in the former/the latter, and is, for example, about 20/80 to 0.1/99.9 and preferably about 15/85 to 0.5/99.5. For the organic acid catalyst, the weight ratio of the organic acid catalyst relative to the solvent (particularly an aprotic solvent) is about 50/50 to 0.5/99.5 and preferably about 30/70 to 0.8/99.2 in the organic acid catalyst/the solvent. Further, the weight ratio of the organic acid catalyst/the solvent may be about 10/90 to 1/99 in the former/the latter. An excessively high ratio of the solvent may reduce the modification percentage of the cellulose and may also reduce the cellulose fibrillation efficiency.

Furthermore, in a case where the monobasic carboxylic anhydride contains acetic anhydride, the catalyst contains a pyridine compound, and the solvent is an alkylsulfoxide compound such as dimethylsulfoxide (DMSO), the weight ratio of the pyridine compound relative to the alkylsulfoxide compound is about 45/55 to 1/99, preferably about 40/60 to 3/97, and more preferably about 30/70 to 5/95 in the pyridine compound/the alkylsulfoxide compound in the light of the reduction or prevention of the discoloration or decomposition of the modified fine cellulose fibers. In a case where the monobasic carboxylic anhydride, the catalyst, and the solvent are used in the above-mentioned combination, the discoloration or decomposition easily occurs. Although the mechanism of the easy occurrence is unclear, it is probable that, in the coexistence of these components, the mechanism be associated with production of dimethylsulfide by oxidative reaction or with easy decomposition of the cellulose. Since a lower ratio of the pyridine compound reduces the fibrillation property and the modification property, the combination of the pyridine compound with the metal compound is preferred as described above.

(Other esterification agents)

In the modification and fibrillation step, other esterification agents may be used in the range where the effects of the present invention are not damaged. Other esterification agents may include a monobasic carboxylic acid [e.g., a saturated aliphatic monocarboxylic acid such as acetic acid, propionic acid, (iso)butyric acid, or valeric acid; an unsaturated aliphatic monocarboxylic acid such as (meth) acrylic acid or oleic acid; an alicyclic monocarboxylic acid such as cyclohexanecarboxylic acid or tetrahydrobenzoic acid; and an aromatic monocarboxylic acid such as benzoic acid or 4-methylbenzoic acid], a dibasic carboxylic acid or an anhydride thereof [e.g., a saturated aliphatic dicarboxylic acid (anhydride) such as succinic acid (anhydride) or adipic acid; an unsaturated aliphatic dicarboxylic acid (anhydride) such as maleic acid (anhydride) or itaconic acid (anhydride) ; an alicyclic dicarboxylic acid (anhydride) such as 1-cyclohexene-1,2-dicarboxylic acid (anhydride), hexahydrophthalic acid (anhydride), or methyltetrahydrophthalic acid (anhydride); and an aromatic dicarboxylic acid (anhydride) such as phthalic acid (anhydride) or naphthalic acid (anhydride)], a polybasic carboxylic acid (e.g., a polycarboxylic acid (anhydride) such as trimellitic acid, trimellitic anhydride, or pyromellitic anhydride), or other agents. These esterification agents may be used alone or in combination. The ratio of other esterification agents relative to 100 parts by weight of the monobasic carboxylic anhydride is not more than 50 parts by weight, and is, for example, about 0 to 35 parts by weight, preferably about 0.01 to 20 parts by weight, and more preferably about 0.1 to 10 parts by weight. An excessively high ratio of other esterification agents may reduce the percentage of modification with the monobasic carboxylic anhydride or may reduce the heat resistance of the resulting modified fine cellulose fibers or the dispersibility of the fibers in the hydrophobic solvent.

(Reaction condition)

In the production method according to the present invention, the cellulose is impregnated with the reactive fibrillation solution containing the catalyst, the monobasic carboxylic anhydride, and the solvent, thereby swelling the cellulose, esterifying the cellulose to esterification-modify (or ester-modify) hydroxyl groups on the surface of the cellulose microfibrils, and fibrillating the cellulose. Such a chemical fibrillation method is not particularly limited to a specific one, and practically utilizes a method which comprises preparing the reactive fibrillation solution and mixing the cellulose with the prepared reactive fibrillation solution.

The method for preparing the reactive fibrillation solution may comprise mixing the catalyst, the monobasic carboxylic anhydride, and the solvent beforehand by stirring or other means to uniformly dissolve the monobasic carboxylic anhydride in the catalyst and the solvent.

The resulting reactive fibrillation solution has a high permeability into the cellulose. Thus, by mixing the cellulose with the reactive fibrillation solution, the reactive fibrillation solution enters between microfibrils and modifies hydroxyl groups on the surface of the microfibrils. In this manner, the modification and fibrillation of the cellulose are simultaneously performable.

Specifically, the chemical fibrillation method may comprise mixing the reactive fibrillation solution with the cellulose and allowing the resulting mixture to stand over one hour or longer for esterification, or may further comprise, after the mixing step, stirring the resulting mixture so as to maintain the cellulose uniformly in the mixture (stirring not so as to physically fibrillating or crushing the cellulose). That is, the reaction simply proceeds by mixing the reactive fibrillation solution with the cellulose and allowing the resulting mixture to stand. To facilitate the impregnation or uniformity, stirring may be carried out with a stirring means. The stirring is not strong stirring for physically pulverizing or fibrillating the cellulose. Practically, the stirring is performed by a magnetic stirrer or stirring blade that is widely used for chemical reactions (for example, stirring about 10 to 15000 rpm and preferably about 50 to 10000 rpm). Moreover, the stirring may be continuously or intermittently carried out.

According to the present invention, the reaction temperature in the chemical fibrillation may be a room temperature without heating. The reaction over one hour or longer allows the chemical fibrillation of the cellulose without any mechanical fibrillation means using the action of a shearing force. Thus, the present invention allows fibrillation of the cellulose without using excess energy. Incidentally, to facilitate the reaction, the reaction may be carried out while heating. The heating temperature is, for example, about not higher than 90°C (e.g., about 40 to 90°C), preferably about not higher than 80°C, and more preferably about not higher than 70°C.

The reaction time can be selected according to the species of the monobasic carboxylic anhydride and catalyst or the donor number of the solvent, and is, for example, about 0.5 to 50 hours, preferably about 1 to 36 hours, and more preferably about 1.5 to 24 hours. For example, in a case where a high-polar lower carboxylic anhydride (such as acetic anhydride) and an aprotic polar solvent having a large donor number (such as dimethylsulfoxide (DMSO)) are used, the reaction time may be several hours (for example, about 1 to 6 hours) and preferably about 1.5 to 5 hours. Further, as described above, the reaction time may be shortened by raising the treatment temperature (reaction temperature). An excessively short reaction time may cause insufficient impregnation of microfibrils with the reactive fibrillation solution, insufficient reaction, and lowered degree of the fibrillation. In contrast, an excessively long reaction time may decrease the yield of the fine cellulose fibers.

The reaction may be carried out under an atmosphere of an inert gas (e.g., nitrogen gas and a rare gas such as argon gas) or under a reduced pressure. The reaction is usually carried out in a sealed (or closed) reactor. Such a reaction condition is preferred, since water generated by the esterification is not discharged from the system or water in the air is not inhaled in the system.

The modified fine cellulose fibers obtained by the chemical fibrillation may be separated and purified by a commonly used method (for example, centrifugation, filtration, concentration, and precipitation). For example, the modified fine cellulose fibers may be separated and purified (washed) by adding to the reaction mixture a solvent (such as acetone) which is capable of dissolving a deactivated product of the esterification agent, the catalyst, and the above-mentioned solvent, and subjecting the resulting mixture to the separation method (commonly used method) such as centrifugation, filtration, precipitation as described above. Incidentally, the separation operation can be carried out multiple times (for example, about twice to 5 times). After the completion of the reaction, a devitalizing agent such as water or methanol may be added to the reaction system to deactivate the monobasic carboxylic anhydride (esterification agent).

Further, in a case where a strong acid catalyst or a strong alkali catalyst, such as toluenesulfonic acid or a metal hydroxide, is used, it is preferred that after the fibrillation the reaction system be neutralized and then washed.

(Modified fine cellulose fibers)

The resulting modified fine cellulose fibers are fibers fibrillated to nano-size and have an average fiber diameter of, for example, about 5 to 800 nm, preferably about 10 to 600 nm, and more preferably about 12 to 500 nm (particularly about 15 to 300 nm). In particular, use of a catalyst containing a pyridine compound in combination with a metal compound allows preparation of finer (extrafine) fibers. Such modified fine cellulose fibers may have an average fiber diameter of, for example, about 5 to 50 nm, preferably about 10 to 40 nm, and more preferably about 12 to 30 nm (particularly about 15 to 25 nm). Fibers having an excessively large fiber diameter may have a small effect as a reinforcing material. Fibers having an excessively small fiber diameter may have small handleability and heat resistance.

The resulting modified fine cellulose fibers, which are chemically fibrillated fibers, have a fiber length longer than fine fibers obtained by the conventional mechanical fibrillation. The modified fine cellulose fibers may have an average fiber length of not less than 1 μm, and, for example, can be selected from a range of about 1 to 200 μm. For example, the modified fine cellulose fibers may have an average fiber length of about 1 to 100 μm (e.g., about 1 to 80 μm), preferably about 2 to 60 μm, and more preferably about 3 to 50 μm. Fibers having an excessively short fiber length may have a small reinforcing effect or poor film-forming function. Fibers having an excessively long fiber length are easily tangled and thus may have a low dispersibility in a solvent or a resin.

The ratio (aspect ratio) of the average fiber length relative to the average fiber diameter in the modified fine cellulose fibers can be selected as usage and may be, for example, not less than 30, e.g., about 40 to 1000, preferably about 50 to 500, and more preferably about 60 to 200 (particularly about 80 to 150).

Incidentally, according to the present invention, the average fiber diameter, the average fiber length, and the aspect ratio of the modified fine cellulose fibers may be determined by randomly selecting 50 fibers from an image of a scanning electron microscope photograph and calculating an arithmetic average of the 50 fibers.

Moreover, each fiber or all fibers of the modified fine cellulose fibers are uniformly esterification-modified (or ester-modified) and are thus well dispersible in an organic medium such as an organic solvent or a resin. In order to let a resin to effectively express the characteristics of such modified fine cellulose fibers (for example, low linear expansion characteristic, high strength, and high heat resistance), it is preferred that the modified fine cellulose fibers have a high crystallinity. The modified fine cellulose fibers of the present invention are chemically fibrillated fibers and can maintain the crystallinity of the raw material cellulose, and thus the degree of crystallinity of the modified fine cellulose fibers can be referred to the numerical value of the cellulose as it is. The modified fine cellulose fibers may have a degree of crystallinity of not less than 50% (particularly not less than 65%), for example, about 50 to 98%, preferably about 65 to 95%, and more preferably about 70 to 92% (particularly about 75 to 90%). Modified fine cellulose fibers having an excessively small degree of crystallinity may have reduced linear expansion, strength, or other characteristics. Incidentally, the degree of crystallinity can be measured according to the method described in the after-mentioned Examples.

The modified fine cellulose fibers may have an average substitution degree of not more than 1.5 (for example, about 0.02 to 1.2) according to the diameter of the fine fibers and the species of the esterification agent. For example, the modified fine cellulose fibers may have an average substitution degree of about 0.05 to 1.0 (e.g., about 0.1 to 1.0), preferably about 0.15 to 0.95, and more preferably about 0.25 to 0.8 (particularly about 0.3 to 0.8). In a case where the average substitution degree is too high, the degree of crystallinity or yield of the fine fibers may be reduced. The average substitution degree (DS: degree of substitution) means the average number of substituted hydroxyl groups per glucose that is a base constitutional unit of cellulose and can be referred to Biomacromolecules 2007, 8, 1973-1978, WO2012/124652A1, WO2014/142166A1, or other documents.

EXAMPLES

Hereinafter, the following examples are intended to describe this invention in further detail and should by no means be interpreted as defining the scope of the invention. Details of raw materials used are as follows. The characteristics and evaluation of resulting modified fine cellulose fibers and oriented films were determined as follows.

(Used raw material, catalyst and solvent)

Cellulose pulp: a pulp obtained by cutting a commercially available wood pulp (manufactured by Georgia Pacific, trade name: Fluff Pulp ARC48000GP, water content: 9% by weight) into a size (about 1 to 3 centimeters square) as short as the pulp may be accommodated by a sample bottle

Other raw materials, catalysts, and solvents: reagents manufactured by NACALAI TESQUE, INC.

(Saturated absorptivity of cellulose)

The saturated absorptivity R of a cellulose to a reactive fibrillation solution was evaluated according to the following procedure. Specifically, a quantity, $W_1$ (e.g., 0.1 g), of the cellulose pulp was added to a quantity, $W_2$ (e.g., 15 g), of a reactive fibrillation solution, and the resulting mixture was allowed to stand at a room temperature for 10 hours. Thereafter, a transparent supernatant fluid was separated, and the supernatant fluid weighed $W_3$. The saturated absorptivity, R, was calculated from according to the following equation.

$$R = (W_2 - W_3)/W_1 \times 100\%$$

(Degree of fibrillation)

Resulting modified fine cellulose fibers were observed by a light microscope ("OPTIPHOT-POL" manufactured by NIKON CORPORATION) to evaluate the degree of cellulose fibrillation on the basis of the following criteria.

A: The cellulose is well fibrillated, and there are few fibers having a fiber diameter not less than 1 $\mu$m.
B: The cellulose is substantially fibrillated, and there are a few fibers having a fiber diameter not less than 1 $\mu$m.
C: The cellulose is not completely fibrillated, and some fibers are fibrillated or largely swell.

D: The raw material cellulose fibers remain intact.

(Surface modification percentage or average substitution degree of modified fine cellulose fibers)

The surface modification percentage of modified fine cellulose fibers is shown in average substitution degree and can be measured according to the following titration method. Incidentally, the average substitution degree is the average of the number of modified hydroxyl groups (the number of substituents) per repeating unit of cellulose.

Specifically, surface-modified fine cellulose fibers were washed with acetone and dried, and to the dried fibers (solid content: 0.05 g) were added 6 ml of methanol and 2 ml of distilled water. The resulting mixture was stirred at 60 to 70°C for 30 minutes. To the mixture was then added 10 ml of a 0.05-N sodium hydroxide aqueous solution, and the resulting mixture was stirred at 60 to 70°C for 15 minutes and then further stirred at a room temperature a day. The resulting mixture was titrated with a 0.02-N hydrochloric acid aqueous solution using phenolphthalein, and the chemical modification percentage was calculated from the following equations.

Based on the following equation, a mole number, Q, of substituents introduced by chemical modification is determined from a quantity, Z (ml), of the 0.02-N hydrochloric acid aqueous solution required to titration.

$$Q \; (mol) \; = $$
$$0.05 \; (N) \; \times \; 10 \; (ml)/1000 \; - \; 0.02 \; (N) \; \times \; Z \; (ml)/1000$$

The relationship between the mole number Q of substituents and the average substitution degree D is shown in the following equation [cellulose = $(C_6O_5H_{10})_n = (162.14)_n$, the number of hydroxyl groups per repeating unit = 3, the molecular weight of OH = 17]:

$$D \; = \; 162.14 \; \times \; Q/[sample \; quantity \; - \; (T-17) \; \times \; Q]$$

wherein T represents a molecular weight of a monobasic carboxylic anhydride, which is a precursor of an esterified substituent.

For each sample, a portion of the sample was analyzed by a Fourier transform infrared spectrophotometer (FT-IR). In all samples, an absorption band of ester bond at 1730 $cm^{-1}$ was detected. For the measurement, "NICOLET MAGNA-IR760 Spectrometer" manufactured by NICOLET was used, and the analysis was carried out in reflection mode.

(Shape observation of modified fine cellulose fibers)

The shape of modified fine cellulose fibers was observed using an FE-SEM ("JSM-6700F" manufactured by JEOL Ltd., measurement conditions: 20 mA, 60 seconds). Incidentally, the average fiber diameter and the average fiber length were determined by randomly selecting 50 fibers from an image of an SEM photograph and calculating an arithmetic average of the 50 fibers.

(Degree of crystallinity)

The degree of crystallinity of resulting modified fine cellulose fibers was measured by XRD analysis method (Segal method) according to a reference: Textile Res. J. 29: 786-794 (1959) and was calculated from the following equation:

$$Degree \; of \; crystallinity \; (\%) \; = \; [(I_{200} \; - \; I_{AM})/I_{200}] \; \times \; 100\%$$

wherein $I_{200}$ represents a diffraction intensity of a lattice plane (002 plane) (diffraction angle $2\theta = 22.6°$) in X-ray diffraction, $I_{AM}$ represents a diffraction intensity of an amorphous portion (a minimum portion between 002 plane and 110 plane, diffraction angle $2\theta = 18.5°$)

(Solvent dispersibility)

In a 20-ml sample bottle, 0.05 g of modified fine cellulose fibers washed with acetone and 10 g of MEK (methyl ethyl ketone) were put, and the mixture was fully stirred by a stirrer and was allowed to stand at a room temperature for 60 minutes. Thereafter, the precipitation state of the fine fibers was observed, and the modified fine cellulose fibers were evaluated for the dispersibility in MEK on the basis of the following criteria.

A: The fine fibers are not precipitated, and a transparent liquid layer is not observed on a suspension layer.
B: The fine fibers are not precipitated, but a transparent liquid layer is observed on a suspension layer.
C: The fine fibers are completely precipitated.

(Degree of coloration of modified fine cellulose fibers)

The degree of coloration of modified fine cellulose fibers was visually observed and was evaluated on the basis of the following criteria.

A: No coloration at all
B: Coloration to the extent that it is not visible by visual observation
C: Coloration in light yellow
D: Coloration in brown

Example 1

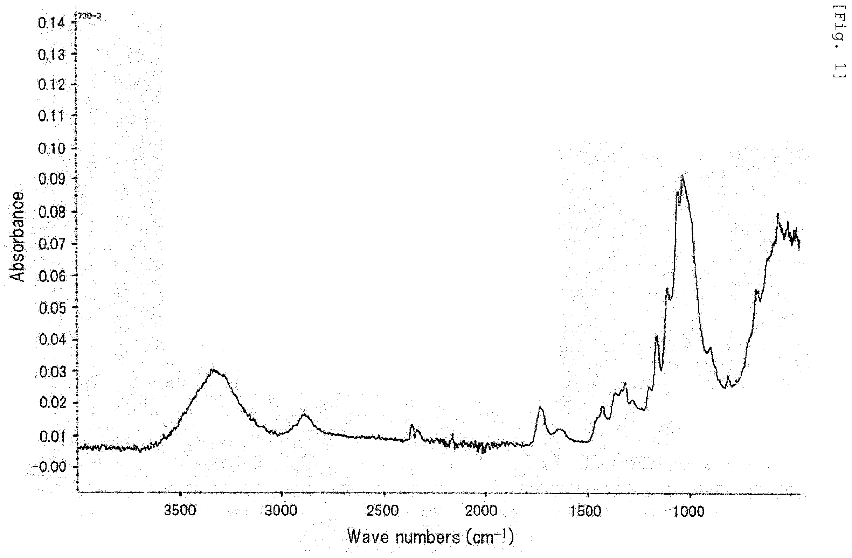

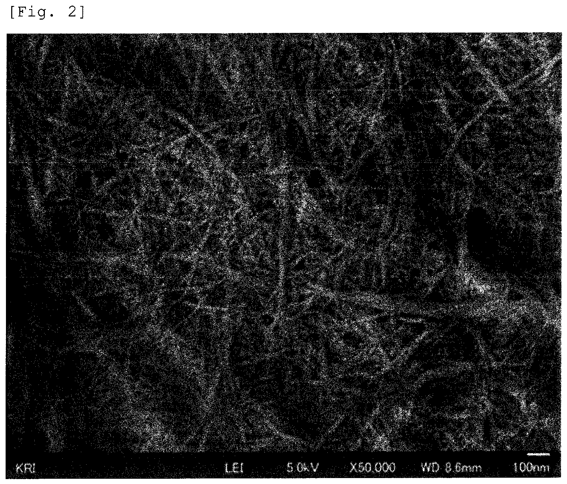

In a 20-ml sample bottle, 3 g of pyridine, 7 g of DMSO, and 1.3 g of propionic anhydride were put, and the solution was stirred until the solution was mixed homogeneously. Then, 0.3 g of the cellulose pulp was added to the solution, and the resulting mixture was stirred for 24 hours and was then washed with a mixed solution of acetone and water to remove pyridine, DMSO, and residual propionic anhydride from the mixture. The solid content was collected. The average substitution degree of the resulting modified fine cellulose fibers was measured, the modified functional group thereof was determined by FT-IR analysis, the shape thereof was observed by a scanning electron microscope (SEM), the degree of crystallinity thereof was measured by XRD analysis, and the degree of fibrillation and the dispersibility in a solvent were evaluated. The results of the FT-IR analysis are shown in Fig. 1, and the SEM photograph is shown in Fig. 2. The results of the SEM observation show that the fibers have an average fiber diameter of 30 nm and an average fiber length of 9.5 $\mu$m. Incidentally, the saturated absorptivity of the pulp to the fibrillation solution was 32 times.

Example 2

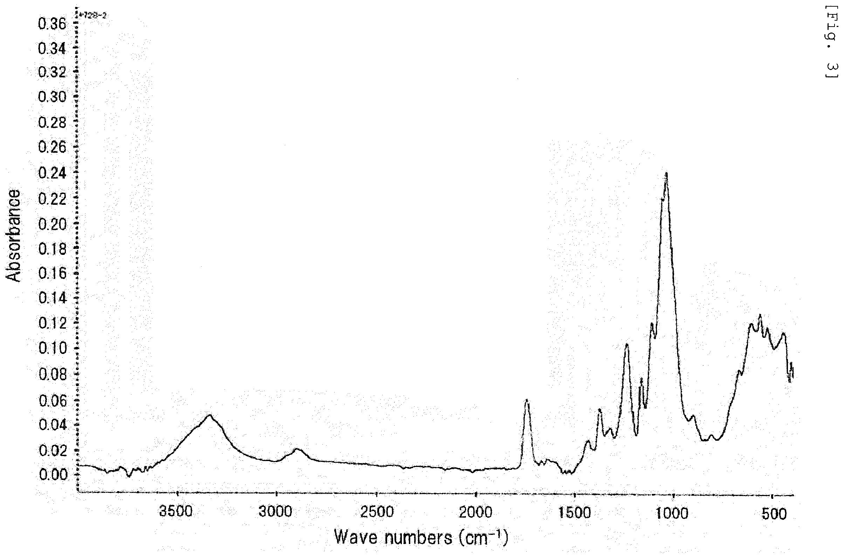

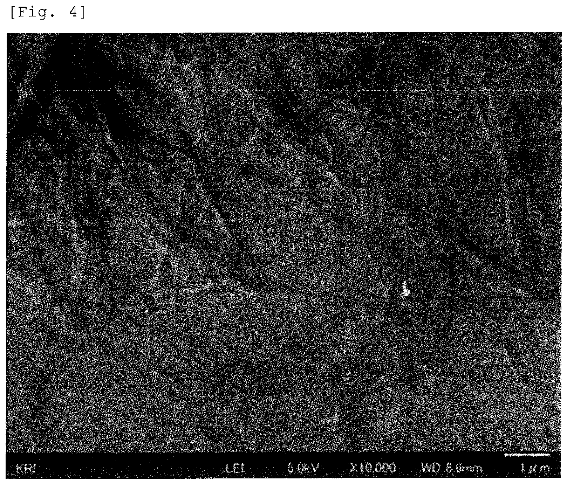

In a 20-ml sample bottle, 3 g of pyridine, 7 g of DMAc, and 1 g of acetic anhydride were put, and modified fine cellulose fibers were obtained in the same manner as Example 1. The resulting modified fine cellulose fibers were evaluated in the same manner as Example 1. The results of the FT-IR analysis were shown in Fig. 3, and the SEM photograph was shown in Fig. 4. The results of the SEM observation show that the fibers have an average fiber diameter of 93 nm and an average fiber length of 12.3 $\mu$m. Incidentally, the saturated absorptivity of the pulp to the fibrillation solution was 28 times.

Example 3

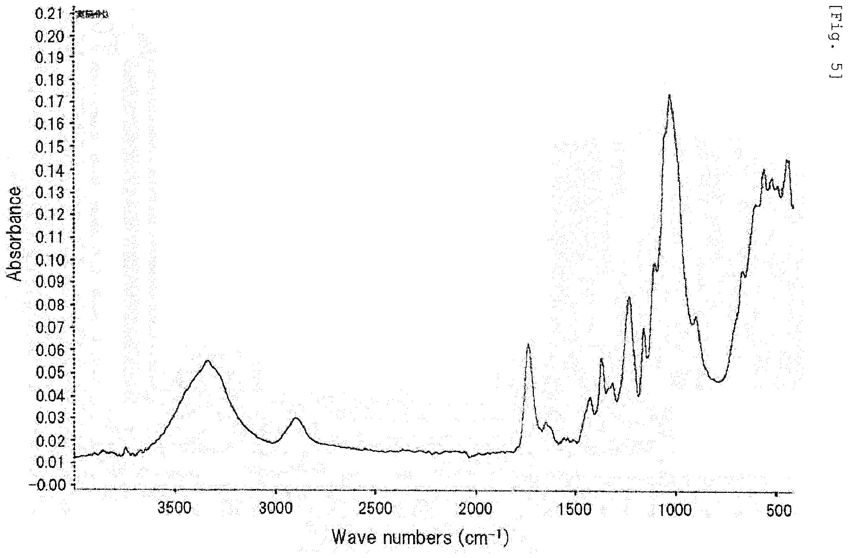

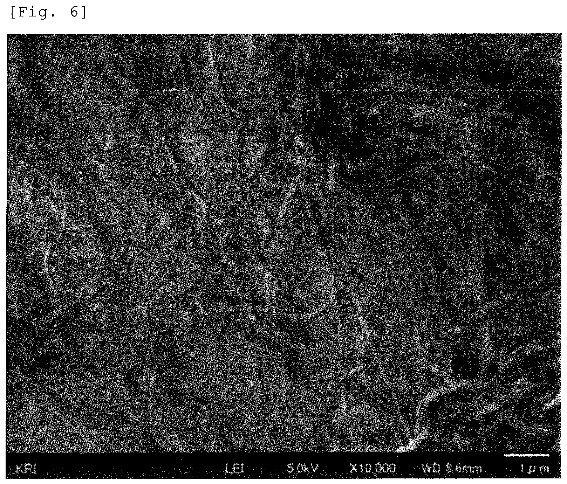

Modified fine cellulose fibers were obtained in the same manner as Example 2 except that the amount of pyridine was changed to 7 g and that 3 g of DMSO was put in a sample bottle instead of 7 g of DMAc. The resulting modified fine cellulose fibers were evaluated in the same manner as Example 1. The results of the FT-IR analysis were shown in Fig. 5, and the SEM photograph was shown in Fig. 6. The results of the SEM observation show that the fibers have an average fiber diameter of 110 nm and an average fiber length of 13.6 $\mu$m. Incidentally, the saturated absorptivity of the pulp to the fibrillation solution was 20 times.

Example 4

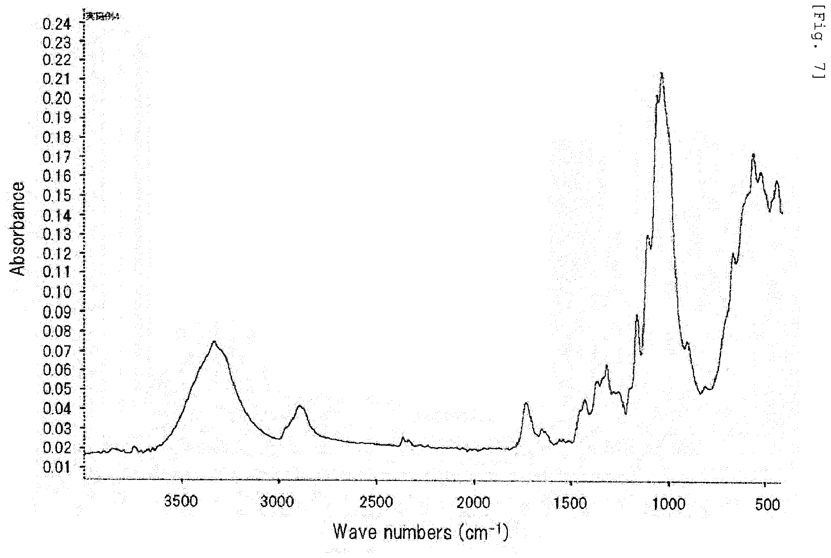

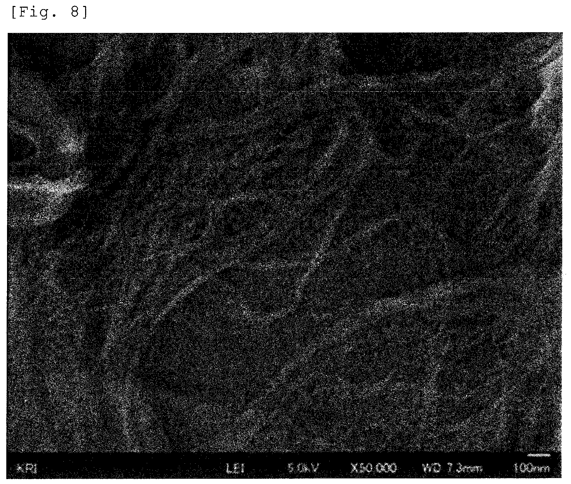

In a sample bottle, 4.5 g of pyridine, 4.5 g of DMSO, and 1 g of butyric anhydride were put, and modified fine cellulose fibers were obtained in the same manner as Example 1. The resulting modified fine cellulose fibers were evaluated in the same manner as Example 1. The results of the FT-IR analysis were shown in Fig. 7, and the SEM photograph was shown in Fig. 8. The results of the SEM observation show that the fibers have an average fiber diameter of 136 nm and an average fiber length of 15.8 $\mu$m. Incidentally, the saturated absorptivity of the pulp to the fibrillation solution was 29 times.

Example 5

In a sample bottle, 5 g of pyridine, 5 g of DMSO, 0.2 g of acetic anhydride, and 0.8 g of butyric anhydride were put, and modified fine cellulose fibers were obtained in the same manner as Example 1. The resulting modified fine cellulose fibers were evaluated in the same manner as Example 1 except FT-IR analysis and SEM observation.

Example 6

Modified fine cellulose fibers were obtained in the same manner as Example 2 except that 1 g of toluenesulfonic acid and 9 g of DMSO were put in a sample bottle instead of 3 g of pyridine and 7 g of DMAc respectively and that the stirring time after addition of the cellulose pulp was changed to 5 hours. The resulting modified fine cellulose fibers were evaluated in the same manner as Example 1 except FT-IR analysis and SEM observation.

Example 7

Modified fine cellulose fibers were obtained in the same manner as Example 3 except that 2 g of benzoic anhydride was put in a sample bottle instead of 1 g of acetic anhydride. The resulting modified fine cellulose fibers were evaluated in the same manner as Example 1 except FT-IR analysis and SEM observation.

Example 8

Modified fine cellulose fibers were obtained in the same manner as Example 2 except that DMF was put in a sample bottle instead of DMAc. The resulting modified fine cellulose fibers were evaluated in the same manner as Example 1 except FT-IR analysis and SEM observation.

Example 9

Modified fine cellulose fibers were obtained in the same manner as in Example 2 except that NMP was put in a sample bottle instead of DMAc. The resulting modified fine cellulose fibers were evaluated in the same manner as Example 1 except FT-IR analysis and SEM observation.

Example 10

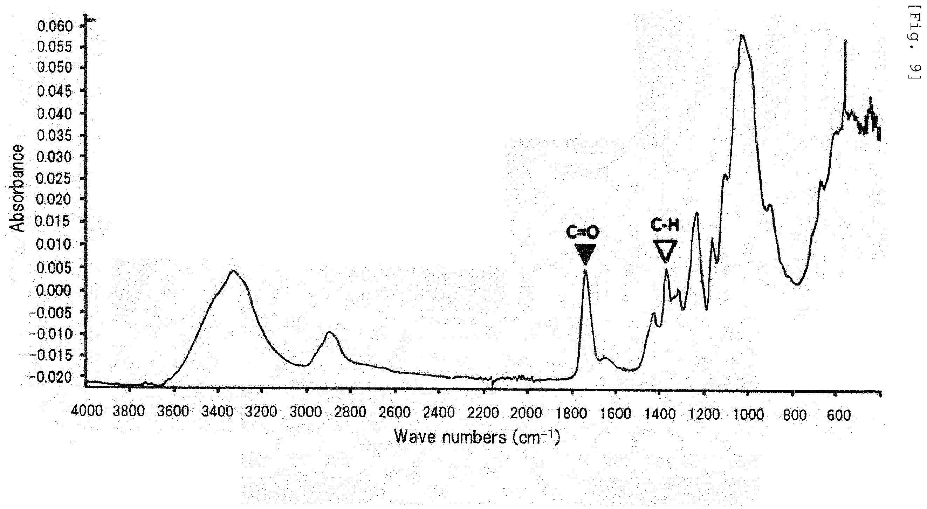

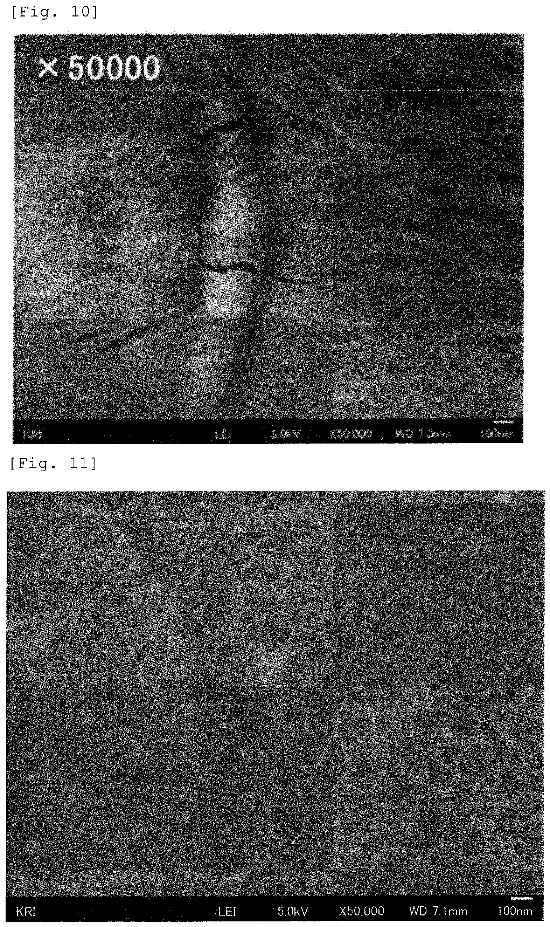

Modified fine cellulose fibers were obtained in the same manner as Example 1 except that 0.5 g of pyridine, 0.05 g of sodium acetate, 9 g of DMSO, and 1 g of acetic anhydride were put in a 20-ml sample bottle and that the stirring time after addition of the cellulose pulp was changed to 2 hours . The resulting modified fine cellulose fibers were evaluated in the same manner as Example 1. The results of the FT-IR analysis were shown in Fig. 9, and the SEM photograph was shown in Fig. 10. The results of the SEM observation show that the fibers have an average fiber diameter of 15 nm and an average fiber length of 6.1 $\mu$m. Incidentally, the saturated absorptivity of the pulp to the fibrillation solution was 33 times.

Example 11

Modified fine cellulose fibers were obtained in the same manner as Example 1 except that 1 g of pyridine, 0.15 g of sodium hydrogencarbonate, 9 g of DMSO, and 1.2 g of propionic anhydride were put in a 20-ml sample bottle and that the stirring time after addition of the cellulose pulp was changed to 2 hours. The resulting modified fine cellulose fibers were evaluated in the same manner as Example 1 except FT-IR analysis. The SEM photograph was shown in Fig. 11. The results of the SEM observation show that the fibers have an average fiber diameter of 15 nm and an average fiber length of 6.9 $\mu$m. Incidentally, the saturated absorptivity of the pulp to the fibrillation solution was 29 times.

Example 12

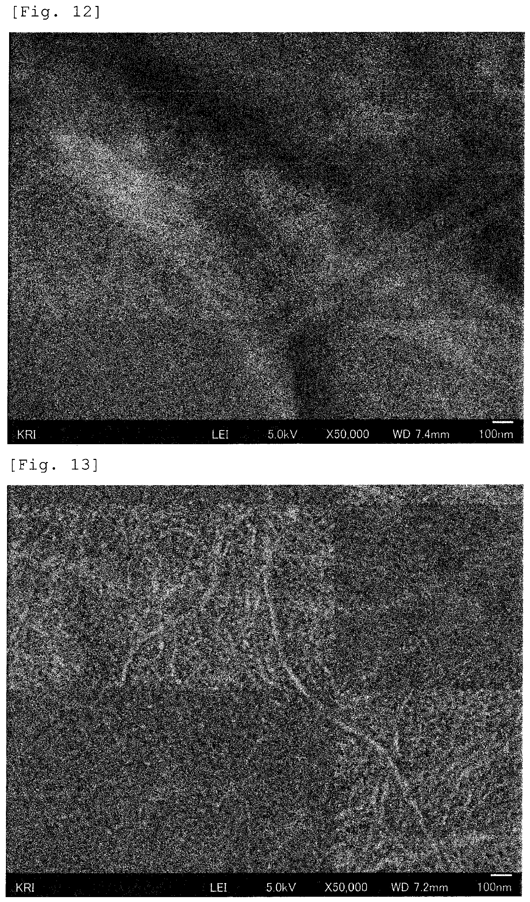

Modified fine cellulose fibers were obtained in the same manner as Example 1 except that 1 g of pyridine, 0.1 g of sodium carbonate, 9 g of DMSO, and 1.2 g of butyric anhydride were put in a 20-ml sample bottle and that the stirring time after addition of the cellulose pulp was changed to 2 hours. The resulting modified fine cellulose fibers ware evaluated in the same manner as Example 1 except FT-IR analysis. The SEM photograph was shown in Fig. 12. The results of the SEM observation show that the fibers have an average fiber diameter of 22 nm and an average fiber length of 6.5 μm. Incidentally, the saturated absorptivity of the pulp to the fibrillation solution was 28 times.

Example 13

In a 20-ml sample bottle, 0.1 g of a sodium hydroxide aqueous solution (sodium hydroxide/water = 1/1 (weight ratio)), 9 g of DMSO, 0.5 g of acetic anhydride, 0.9 g of butyric anhydride were put, and the solution was stirred until the solution was mixed homogeneously. Then, 0.3 g of the cellulose pulp was added to the solution, and the resulting mixture was stirred for another 2 hours. Thereafter, the sodium hydroxide was neutralized with hydrochloric acid equivalent to the sodium hydroxide, and the resulting mixture was washed with a mixed solution of acetone and water to remove sodium chloride, DMSO, residual acetic anhydride, and residual butyric anhydride from the mixture. The resulting modified fine cellulose fibers were evaluated in the same manner as Example 1 except FT-IR analysis. The SEM photograph is shown in Fig. 13. The results of the SEM observation show that the fibers have an average fiber diameter of 10 nm and an average fiber length of 5.3 μm. Incidentally, the saturated absorptivity of the pulp to the fibrillation solution was 35 times.

Comparative Example 1

Modified fine cellulose fibers were obtained in the same manner as Example 2 except that pyridine was not added and that the amount of DMAc was changed to 10 g. The resulting modified fine cellulose fibers were evaluated in the same manner as Example 1 except FT-IR analysis and SEM observation.

Comparative Example 2

Modified fine cellulose fibers were obtained in the same manner as Example 2 except that pyridine was not added and that DMAc was changed to 10 g of DMSO. The resulting modified fine cellulose fibers were evaluated in the same manner as Example 1 except FT-IR analysis and SEM observation.

Comparative Example 3

Modified fine cellulose fibers were obtained in the same manner as Example 1 except that pyridine was not added, that the amount of DMSO was changed to 10 g, and that propionic anhydride was changed to 2 g of lauryl chloride. The resulting modified fine cellulose fibers were evaluated in the same manner as Example 1 except FT-IR analysis and SEM observation.

Comparative Example 4

Modified fine cellulose fibers were obtained in the same manner as Example 1 except that the amount of pyridine was changed to 10 g, that DMSO was not added, and that propionic anhydride was changed to 1 g of lauryl chloride. The resulting modified fine cellulose fibers were evaluated in the same manner as Example 1 except FT-IR analysis and SEM observation.

Comparative Example 5

Modified fine cellulose fibers were obtained in the same manner as Example 2 except that the amount of pyridine was changed to 5 g and that DMAc was changed to 5 g of 1, 4-dioxane. The resulting modified fine cellulose fibers were evaluated in the same manner as Example 1 except FT-IR analysis and SEM observation.
Table 1 shows the evaluation results of the modified fine cellulose fibers obtained in Examples and Comparative Examples.

[Table 1]

Table 1

| | Composition (weight ratio) | Fibrillation reaction temperature/ time | Degree of fibrillation | Degree of substitution (DS) | Degree of crystallinity (%) | Dispersibility | Degree of coloration |
|---|---|---|---|---|---|---|---|
| Example 1 | Pyridine/DMSO/Propionic anhydride/Pulp (3/7/1.3/0.3) | Room temperature /24 hrs | A | 0.2 | 83 | A | B |
| Example 2 | Pyridine/DMAc/Acetic anhydride/Pulp (3/7/1/0.3) | Room temperature /24 hrs | B | 0.4 | 79 | A | A |
| Example 3 | Pyridine/DMSO/Acetic anhydride/Pulp (7/3/1/0.3) | Room temperature /24 hrs | A | 0.6 | 75 | A | C |
| Example 4 | Pyridine/DMSO/Butyric anhydride/Pulp (4.5/4.5/1/0.3) | Room temperature /24 hrs | A | 0.2 | 78 | A | B |
| Example 5 | Pyridine/DMSO/Acetic anhydride/Butyric anhydride/Pulp (5/5/0.2/0.8/0.3) | Room temperature /24 hrs | A | 0.4 | 75 | A | B |
| Example 6 | Toluenesulfonic acid/DMSO/Acetic anhydride/ Pulp (1/9/1/0.3) | Room temperature /5 hrs | B | 0.2 | 70 | B | A |
| Example 7 | Pyridine/DMSO/Benzoic anhydride/Pulp (7/3/2/0.3) | Room temperature /24 hrs | B | 0.15 | 71 | B | B |
| Example 8 | Pyridine/DMF/Acetic anhydride/Pulp (3/7/1/0.3) | Room temperature /24 hrs | B | 0.2 | 80 | B | A |
| Example 9 | Pyridine/NMP/Acetic anhydride/Pulp (3/7/1/0.3) | Room temperature /24 hrs | B | 0.4 | 87 | B | A |

EP 3 369 748 B1

16

| | Composition (weight ratio) | Fibrillation reaction temperature/ time | Degree of fibrillation | Degree of substitution (DS) | Degree of crystallinity (%) | Dispersibility | Degree of coloration |
|---|---|---|---|---|---|---|---|
| Example 10 | Pyridine/NaOAc/DMSO/Acetic anhydride/Pulp (0.5/0.05/9/1/0.3) | Room temperature /2 hrs | A | 0.59 | 83 | A | A |
| Example 11 | Pyridine/NaHCO$_3$/DMSO/Propionic anhydride/ Pulp (1/0.15/9/1.2/0.3) | Room temperature /2 hrs | A | 0.39 | 83 | A | A |
| Example 12 | Pyridine/Na$_2$CO$_3$/DMSO/Butyric anhydride/ Pulp (1/0.1/9/1.2/0.3) | Room temperature /2 hrs | A | 0.36 | 81 | A | A |
| Example 13 | NaOH aqueous solution/DMSO/Acetic anhydride/ Butyric anhydride/Pulp 0.1/9/0.5/0.9/0.3 | Room temperature /2 hrs | A | 0.20 | 70 | A | A |
| Comparative Example 1 | DMAc/Acetic anhydride/Pulp (10/1/0.3) | Room temperature /24 hrs | D | 0.1 | - | C | B |
| Comparative Example 2 | DMSO/Acetic anhydride/Pulp (10/1/0.3) | Room temperature /24 hrs | D | 0.1 | - | C | B |
| Comparative Example 3 | DMSO/Lauryl chloride/Pulp (10/2/0.3) | Room temperature /24 hrs | D | 0.2 | - | C | C |
| Comparative Example 4 | Pyridine/Lauryl chloride/Pulp (10/1/0.3) | Room temperature /24 hrs | D | 0.3 | - | C | C |
| Comparative Example 5 | Pyridine/Dioxane/Acetic anhydride/Pulp 5/5/1/0.3 | Room temperature /24 hrs | D | 0.3 | - | C | B |

17

As apparent from the results shown in Table 1, the modified fine cellulose fibers obtained in Examples were fibrillated, while the modified fine cellulose fibers obtained in Comparative Examples was hardly fibrillated.

INDUSTRIAL APPLICABILITY

The modified fine cellulose fibers according to the present invention are utilizable for various composite materials and coating agents and are also utilizable as shaped sheets or films.

**Claims**

1.  A method for producing modified fine cellulose fibers, comprising: impregnating a cellulose with a reactive fibrillation solution or mixture to esterify and chemically fibrillate the cellulose,
    wherein said modified fine cellulose fibers have an average fiber diameter of 10 to 800 nm and comprise microfibrils,
    said microfibrils contain a crystalline cellulose I and have chemically-modified surfaces,
    said reactive fibrillation solution or mixture contains a catalyst including a base catalyst or an organic acid catalyst, a monobasic carboxylic anhydride, and an aprotic solvent having a donor number of not less than 26,
    said base catalyst comprises at least one base catalyst selected from the group consisting of an alkali metal compound and an alkaline earth metal compound,
    said monobasic carboxylic anhydride comprises at least one member selected from the group consisting of an aliphatic monocarboxylic anhydride, an alicyclic monocarboxylic anhydride, and an aromatic monocarboxylic anhydride, and is represented by the formula:

    $$R^1CO\text{-}O\text{-}OCR^2,$$

    wherein $R^1$ and $R^2$ are the same and each represents a saturated or unsaturated aliphatic hydrocarbon group, a saturated or unsaturated alicyclic hydrocarbon group, or an aromatic hydrocarbon group",
    said aprotic solvent comprises at least one member selected from the group consisting of dimethylsulfoxide, N,N-dimethylacetamide, N,N-dimethylformamide, and N-methyl-2-pyrrolidone.

2.  The method according to claim 1, wherein the monobasic carboxylic anhydride comprises at least one member selected from the group consisting of acetic anhydride, propionic anhydride, butyric anhydride, isobutyric anhydride, valeric anhydride, (meth)acrylic anhydride, crotonic anhydride, oleic anhydride, cyclohexanecarboxylic anhydride, tetrahydrobenzoic anhydride, benzoic anhydride, and 4-methylbenzoic anhydride.

3.  The method according to claim 1 or 2, wherein a proportion of the monobasic carboxylic anhydride is 3 to 50% by weight in the whole reactive fibrillation solution or mixture.

4.  The method according to any one of claims 1 to 3, wherein the catalyst is a base catalyst, a proportion of the base catalyst is 0.05 to 90% by weight in the whole reactive fibrillation solution or mixture.

5.  The method according to any one of claims 1 to 4, wherein the catalyst is a pyridine compound in combination with an alkali metal compound and/or an alkaline earth metal compound, a proportion of the catalyst is 0.05 to 20% by weight in the whole reactive fibrillation solution or mixture.

6.  The method according to any one of claims 1 to 5, wherein the monobasic carboxylic anhydride comprises a $C_{1\text{-}6}$alkane-monocarboxylic anhydride.

7.  The method according to any one of claims 1 to 6, wherein the cellulose can hold or swell 10 to 100 times its weight in the reactive fibrillation solution or mixture.

8.  The method according to any one of claims 1 to 7, wherein a weight ratio of the cellulose relative to the reactive fibrillation solution or mixture is 1/99 to 30/70 in the former/the latter.

9.  The method according to any one of claims 1 to 8, wherein the modified fine cellulose fibers are modified with a monobasic carboxylic anhydride and have a dispersibility in a hydrophobic solvent, a degree of crystallinity of not less than 70%, and an average fiber length of 1 to 200 $\mu$m.

10. The method according to any one of claims 1 to 9, wherein the modified fine cellulose fibers have an average substitution degree of 0.05 to 1.0.

11. The method according to any one of claims 1 to 8, wherein the cellulose has a water content of not less than 1% by weight.

**Patentansprüche**

1. Verfahren zur Erzeugung von modifizierten feinen Cellulosefasern, enthaltend: Imprägnieren einer Cellulose mit einer reaktiven Fibrillierungslösung oder einer -mischung, zum Verestern und chemischen Fibrillieren der Cellulose, worin die modifizierten feinen Cellulosefasern einen durchschnittlichen Faserdurchmesser von 10 bis 800 nm und Mikrofibrillen enthalten,
die Mikrofibrillen eine kristalline Cellulose I enthalten und chemisch modifizierte Oberflächen haben,
die reaktive Fibrillierungslösung oder -mischung einen Katalysator, der einen basischen Katalysator oder einen organischen Säurekatalysator enthält, ein monobasisches Carbonsäureanhydrid und ein aprotisches Lösungsmittel mit einer Donorzahl von nicht weniger als 26 enthält,
wobei der basische Katalysator zumindest einen basischen Katalysator enthält, ausgewählt aus der Gruppe, bestehend aus einer Alkalimetallverbindung und einer Erdalkalimetallverbindung,
das monobasische Carbonsäureanhydrid zumindest ein Mietglied enthält, ausgewählt aus der Gruppe, bestehend aus einem aliphatischen Monocarbonsäureanhydrid, einem alicyclischen Monocarbonsäureanhydrid und einem aromatischen Monocarbonsäureanhydrid und dargestellt ist durch die Formel:

$$R^1CO\text{-}O\text{-}OCR^2$$

worin $R^1$ und $R^2$ gleich sind und jeweils eine gesättigte oder ungesättigte aliphatische Kohlenwasserstoffgruppe, eine gesättigte oder ungesättigte alicyclische Kohlenwasserstoffgruppe oder eine aromatische Kohlenwasserstoffgruppe sind,
das aprotische Lösungsmittel zumindest ein Mitglied enthält, ausgewählt aus der Gruppe, bestehend aus Dimethylsulfoxid, N,N-Dimethylacetamid, N,N-Dimethylformamid und N-Methyl-2-pyrrolidon.

2. Verfahren gemäß Anspruch 1, worin das monobasische Carbonsäureanhydrid zumindest ein Mitglied enthält, ausgewählt aus der Gruppe, bestehend aus Essigsäureanhydrid, Propionsäureanhydrid, Buttersäureanhydrid, Isobuttersäureanhydrid, Valeriansäureanhydrid, (Meth)acrylsäureanhydrid, Crotonsäureanhydrid, Ölsäureanhydrid, Cyclohexancarbonsäureanhydrid, Tetrahydrobenzoesäureanhydrid, Benzoeanhydrid und 4-Methylbenzoeanhydrid.

3. Verfahren gemäß Anspruch 1 oder 2, worin ein Anteil des monobasischen Carbonsäureanhydrides 3 bis 50 Gew.-% in der gesamten reaktiven Fibrillierungslösung oder -mischung ist.

4. Verfahren gemäß einem der Ansprüche 1 bis 3, worin der Katalysator ein basischer Katalysator ist, ein Anteil des basischen Katalysators 0,05 bis 90 Gew.-% in der gesamten reaktiven Fibrillierungslösung oder -mischung ist.

5. Verfahren gemäß einem der Ansprüche 1 bis 4, worin der Katalysator eine Pyridinverbindung in Kombination mit einer Alkalimetallverbindung und/oder einer Erdalkalimetallverbindung ist, ein Anteil des Katalysators 0,05 bis 20 Gew.-% in der gesamten reaktiven Fibrillierungslösung oder -mischung ist.

6. Verfahren gemäß einem der Ansprüche 1 bis 5, worin das monobasische Carbonsäureanhydrid ein $C_{1-6}$-Alkan-Monocarbonsäureanhydrid enthält.

7. Verfahren gemäß einem der Ansprüche 1 bis 6, worin die Cellulose das 10- bis 100-fache ihres Gewichtes in der reaktiven Fibrillierungslösung oder -mischung halten oder quellen kann.

8. Verfahren gemäß einem der Ansprüche 1 bis 7, worin ein Gewichtsverhältnis der Cellulose in Bezug auf die reaktive Fibrillierungslösung oder -mischung 1/99 bis 30/70 in der zuerst genannten/der zuletzt genannten ist.

9. Verfahren gemäß einem der Ansprüche 1 bis 8, worin die modifizierten feinen Cellulosfasern mit einem monobasischen Carbonsäureanhydrid modifiziert sind und ein Dispergiervermögen in einem hydrophoben Lösungsmittel, einen Grad der Kristallinität von nicht weniger als 70 % und eine durchschnittliche Faserlänge von 1 bis 200 μm haben.

**10.** Verfahren gemäß einem der Ansprüche 1 bis 9, worin die modifizierten feinen Cellulosefasern einen durchschnittlichen Substitutionsgrad von 0,05 bis 1,0 haben.

**11.** Verfahren gemäß einem der Ansprüche 1 bis 8, worin die Cellulose einen Wassergehalt von nicht weniger als 1 Gew.-% hat.

**Revendications**

**1.** Procédé de production de fibres de cellulose fines modifiées, comprenant :
l'imprégnation d'une cellulose avec une solution ou un mélange de fibrillation réactif pour estérifier et fibriller chimiquement la cellulose,
dans lequel lesdites fibres de cellulose fines modifiées ont un diamètre de fibre moyen de 10 à 800 nm et comprennent des microfibrilles,
lesdites microfibrilles contiennent une cellulose cristalline I et ont des surfaces chimiquement modifiées,
ladite solution ou ledit mélange de fibrillation réactif contient un catalyseur incluant un catalyseur basique ou un catalyseur acide organique, un anhydride carboxylique monobasique et un solvant aprotique ayant un nombre de donneur supérieur ou égal à 26,
ledit catalyseur basique comprend au moins un catalyseur basique choisi parmi le groupe consistant en un composé à base de métal alcalin et en un composé à base de métal alcalino-terreux,
ledit anhydride carboxylique monobasique comprend au moins un élément choisi parmi le groupe consistant en un anhydride monocarboxylique aliphatique, un anhydride monocarboxylique alicyclique et en un anhydride monocarboxylique aromatique, et est représenté par la formule :

$$R^1CO\text{-}O\text{-}OCR^2$$

dans lequel $R^1$ et $R^2$ sont identiques et représentent chacun un groupe hydrocarboné aliphatique saturé ou insaturé, un groupe hydrocarboné alicyclique saturé ou insaturé, ou un groupe hydrocarboné aromatique,
ledit solvant aprotique comprend au moins un élément choisi parmi le groupe consistant en du sulfoxyde de diméthyle, du N,N-diméthylacétamide, du N,N-diméthylformamide et en de la N-méthyl-2-pyrrolidone.

**2.** Procédé selon la revendication 1, dans lequel l'anhydride carboxylique monobasique comprend au moins un élément choisi parmi le groupe consistant en de l'anhydride acétique, l'anhydride propionique, l'anhydride butyrique, l'anhydride isobutyrique, l'anhydride valérique, l'anhydride (méthyl)acrylique, l'anhydride crotonique, l'anhydride oléique, l'anhydride cyclohexanecarboxylique, l'anhydride tétrahydrobenzoïque, l'anhydride benzoïque et en de l'anhydride 4-méthylbenzoïque.

**3.** Procédé selon la revendication 1 ou 2, dans lequel une proportion de l'anhydride carboxylique monobasique va de 3 à 50 % en poids dans la totalité de la solution ou du mélange de fibrillation réactif.

**4.** Procédé selon l'une quelconque des revendications 1 à 3, dans lequel le catalyseur est un catalyseur basique, une proportion du catalyseur basique va de 0,05 à 90 % en poids dans la totalité de la solution ou du mélange de fibrillation réactif.

**5.** Procédé selon l'une quelconque des revendications 1 à 4, dans lequel le catalyseur est un composé de pyridine en combinaison avec un composé à base de métal alcalin et/ou un composé à base de métal alcalino-terreux, une proportion du catalyseur va de 0,05 à 20 % en poids dans la totalité de la solution ou du mélange de fibrillation réactif.

**6.** Procédé selon l'une quelconque des revendications 1 à 5, dans lequel l'anhydride carboxylique monobasique comprend un anhydride (alcane en $C_{1-6}$)monocarboxylique.

**7.** Procédé selon l'une quelconque des revendications 1 à 6, dans lequel la cellulose peut retenir ou gonfler de 10 à 100 fois son poids dans la solution ou le mélange de fibrillation réactif.

**8.** Procédé selon l'une quelconque des revendications 1 à 7, dans lequel un rapport en poids de la cellulose par rapport à la solution ou le mélange de fibrillation réactif va de 1/99 à 30/70 dans le premier/le second.

**9.** Procédé selon l'une quelconque des revendications 1 à 8, dans lequel les fibres de cellulose fines modifiées sont modifiées avec un anhydride carboxylique monobasique et ont une dispersibilité dans un solvant hydrophobe, un degré de cristallinité supérieur ou égal à 70 % et une longueur de fibre moyenne allant de 1 à 200 µm.

10. Procédé selon l'une quelconque des revendications 1 à 9, dans lequel les fibres de cellulose fines modifiées ont un degré de substitution moyen allant de 0,05 à 1,0.

11. Procédé selon l'une quelconque des revendications 1 à 8, dans lequel la cellulose a une teneur en eau supérieure ou égale à 1 % en poids.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010104768 A
- JP 2015500354 PCT
- JP 2015500354 A
- JP 2011016995 A
- WO 2010116794 A
- WO 2012124652 A1
- WO 2014142166 A1

### Non-patent literature cited in the description

- *Netsu Sokutei,* vol. 28 (3), 135-143
- *Biomacromolecules,* 2007, vol. 8, 1973-1978
- *Textile Res. J.,* 1959, vol. 29, 786-794